# EUROPÄISCHE PATENTSCHRIFT

(11) **EP 2 419 978 B1**
(45) Veröffentlichungstag und Bekanntmachung des Hinweises auf die Patenterteilung: **11.02.2015**
(21) Anmeldenummer: 10714452.9
(22) Anmeldetag: 15.04.2010
(51) Int. Cl.: H02G 3/04

(54) **KABELFÜHRUNG**
CABLE GUIDE
CHEMINEMENT DE CABLE

(30) Priorität: 16.04.2009 DE 202009005546 U
(43) Veröffentlichungstag der Anmeldung: 22.02.2012
(73) Patentinhaber: Igus GmbH, 51147 Köln (DE)
(72) Erfinder: HERMEY, Andreas, 53773 Hennef (DE); BLASE, Frank, 51429 Bergisch Gladbach (DE); STEEGER, Ralf, 53797 Lohmar (DE)
(74) Vertreter: Lippert, Stachow & Partner
(86) Internationale Anmeldenummer: PCT/EP2010/054928
(87) Internationale Veröffentlichungsnummer: WO 2010/119083

(56) Entgegenhaltungen:
- EP-A1- 0 875 695
- EP-A2- 1 193 819
- WO-A2-03/084721
- DE-A1-102006 030 086

## Beschreibung

Die Erfindung betrifft eine Kabelführung gemäß dem Oberbegriff des Anspruches 1.

Aus EP 0875695 A1 ist eine Energieführungskette zum stationären Führen von Leitungen bekannt. Die gegeneinander abwinkelbaren Kettenglieder dieser Energieführungskette sind unter Verwendung von Kreuzgelenken miteinander verbindbar, deren eines Gelenkteil Laschen aufweist, die jeweils mit einer Gelenkpfanne versehen sind. Ferner ist ein Gelenkkörper vorgesehen, welcher zur Herstellung der Gelenkverbindung zwischen die Laschen des Zentralkörpers eingebracht wird derart, dass am Gelenkkörper angebrachte Gelenkköpfe von den Gelenkpfannen aufgenommen sind.

Weiterhin ist aus EP 1616376 B1 eine Kabelführung bekannt, die mit einem eine Kugel und eine entsprechend geformte Pfanne aufweisenden Verbindungssystem versehen ist. Zur Handhabung, insbesondere zum Verbinden der einzelnen Glieder dieser Kabelführung müssen die Teile um einen Winkel von 90° zur Längsachse der Kabelführung verschwenkt werden. Bei Kabelführungen, Energieführungsketten usw. mit größerem Durchmesser kann dies zu einer etwas umständlichen Handhabung führen.

Der Erfindung liegt somit die Aufgabe zu Grunde, eine Kabelführung, Energiekette oder dgl. So auszugestalten, dass sie bei einfacher Anordnung und Konfiguration der Verbindungskomponenten beim Zusammensetzen oder Auseinandernehmen leicht zu handhaben sind. Dabei soll eine möglichst kardanische hohe Verschwenkbarkeit der einzelnen Glieder gegeneinander möglich sein.

Diese Aufgabe wird durch die Lehre gemäß Anspruch 1 gelöst.

Die ganz oder überwiegend aus Kunststoff bestehenden Einzelteile können unter Anwendung bekannter Herstellungsverfahren gefertigt werden. Zudem kann auch hier die den üblichen Kunststoffen innewohnende Elastizität dazu benutzt werden, die Handhabung zu vereinfachen beispielsweise derart, dass leicht herstellbare und lösbare Schnappverbindungen nutzbar gemacht werden.

Weitere Ausgestaltungen der Erfindung ergeben sich aus den Unteransprüchen.

In den Zeichnungen sind zwei Ausführungsbeispiele der Erfindung dargestellt. Es zeigen
- Figur 1: die Vorderansicht eines Gliedes eines ersten Ausführungsbeispiels einer Kabelführung,
- Figur 2: einen Schnitt nach der Linie A-A der Figur 1 zweier miteinander verbundener Glieder,
- Figur 3: eine der Figur 2 entsprechende Darstellung zweier Glieder der Kabelführung unmittelbar vor dem Zusammenfügen derselben,
- Figur 4: die perspektivische Ansicht eines ersten Verbindungsbolzens,
- Figur 5: die Ansicht eines Details an der gabelförmigen Verbindungskomponente mit darin eingesetztem Bolzen,
- Figur 6: eine der Figur 5 entsprechende Ansicht, bei welcher die einzelnen Teile eine andere Position zueinander einnehmen,
- Figur 7: die Vorderansicht eines Gliedes eines zweiten Ausführungsbeispiels einer Kabelführung,
- Figur 8: die zugehörige Rückansicht,
- Figur 9: einen Längsschnitt durch die Kabelführung gemäß den Figuren 7 und 8, der das Einsetzen der Gelenkbolzen zum Herstellen einer Verbindung zwischen zwei benachbarten Gliedern zeigt,
- Figur 10: eine der Figur 9 entsprechende Darstellung, die das Entfernen der Gelenkbolzen zum Lösen der Verbindung zwischen zwei benachbarten Gliedern zeigt,
- Figur 11: die Seitenansicht eines zweiten Verbindungsbolzens,
- Figur 12: eine perspektivische Ansicht dieses Verbindungsbolzens.

Die Kabelführung 10 weist eine Vielzahl von nach Art einer Kette gelenkig miteinander verbundener und jeweils praktisch in allen Richtungen gegeneinander abwinkelbarer stirnseitig offener Glieder 12 auf, die mit einem gegebenenfalls geschlossenen Mantelteil 14 mit rotationssymmetrischen Außenkonturen versehen sind. Die Mantelteile begrenzen wenigstens einen Führungskanal 16, 17 für die innerhalb der Kette unterzubringenden Kabel, Leitungen usw. Jedes Glied 12 ist mit einem Verbindungselement 18 versehen, welches über einen im Wesentlichen radialen Steg 15 oder dgl. mit dem jeweiligen Mantelteil 14 verbunden ist und zwei Komponenten 20, 22 aufweist. Die erste Komponente 20 ist als Gabel mit zwei Schenkeln 24, 26 ausgebildet, die beide mit einer Durchbrechung 27 bzw. 28 versehen sind. Die zweite Komponente 22 weist einen Arm 23 auf, welcher mit einer Durchbrechung 32 versehen ist, deren Begrenzungsfläche sphärisch, also kugelförmig ausgebildet ist und einen ersten Sitz für einen außenseitig entsprechend sphärisch begrenzten Gelenkkörper 34 bildet, der mit einer mittigen zylindrischen Bohrung 36 versehen ist und dessen axiale Erstreckung dem Abstand der beiden Schenkel 24, 26 voneinander entspricht.

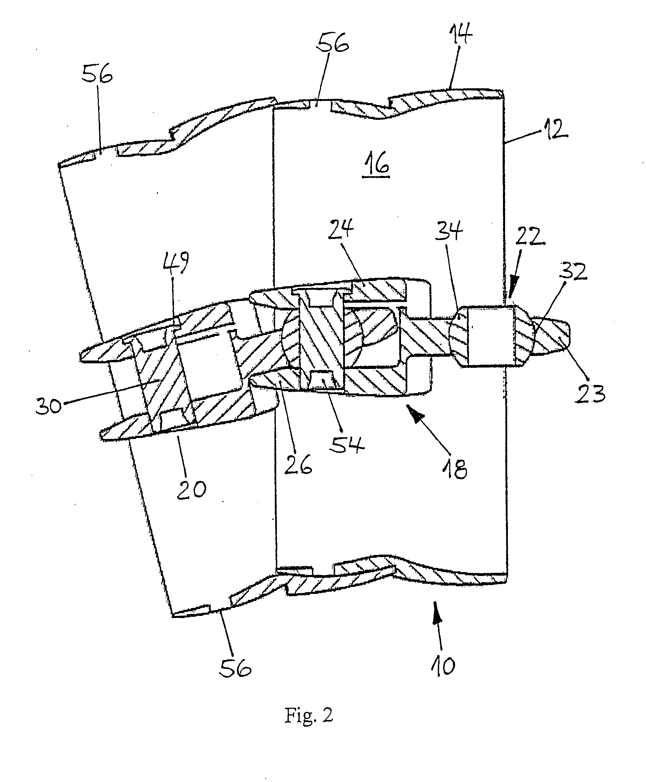

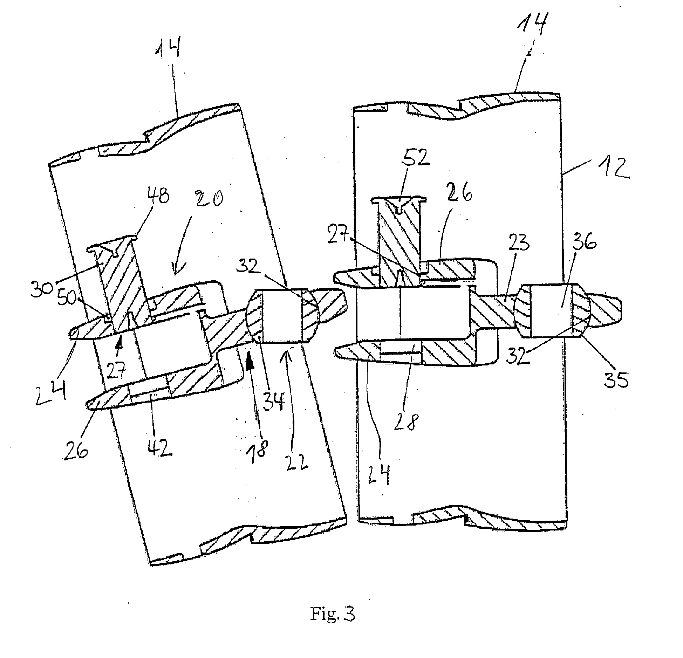

Die Verbindung zweier benachbarter Glieder 12 erfolgt in der Weise, dass - ausgehend beispielsweise von der Position der Teile in Fig. 3 - die zweite Verbindungskomponente 22 des einen Glieds zwischen die beiden Schenkel der ersten Verbindungskomponente 20 des benachbarten Gliedes eingeführt wird derart, dass die Bohrungen 27, 28 in den beiden Schenkeln 24 bzw. 26 mit der Bohrung 36 im Gelenkkörper 34 der zweiten Verbindungskomponente 22 fluchten, so dass sämtliche Bohrungen 27, 28 und 36 einen zweiten Sitz für einen zylindrischen Bolzen 30 bilden, der von der in Figur 3 jeweils dargestellten Ausgangsposition in die Bohrung 27 im Schenkel 24 und weiter in die Endposition gemäß Fig. 2 in diesem zweiten Sitz eingesteckt werden kann. Auf diese Weise entsteht eine praktisch kardanische gelenkige Verbindung zwischen zwei benachbarten Gliedern 12 der Kabelführung, wobei die jeweiligen Endbereiche zweier benachbarter Glieder einander überlappen, wie dies in Fig. 2 dargestellt ist.

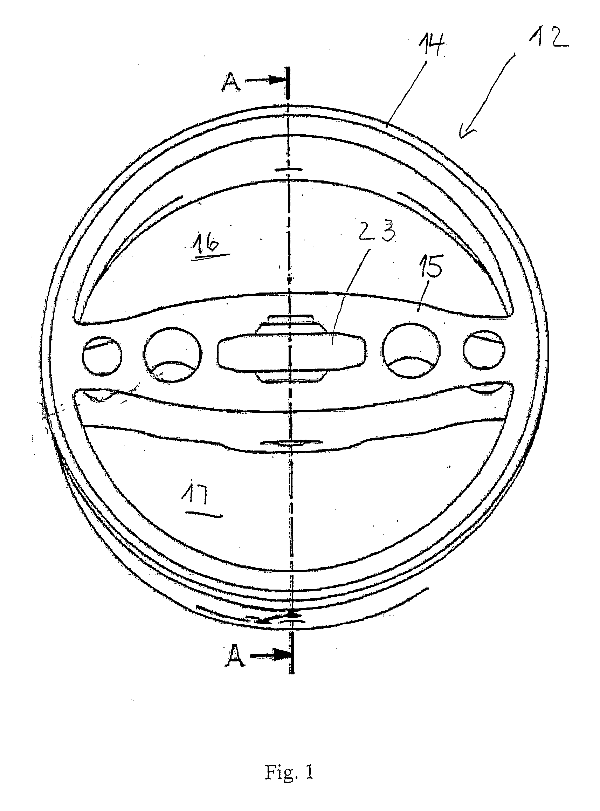

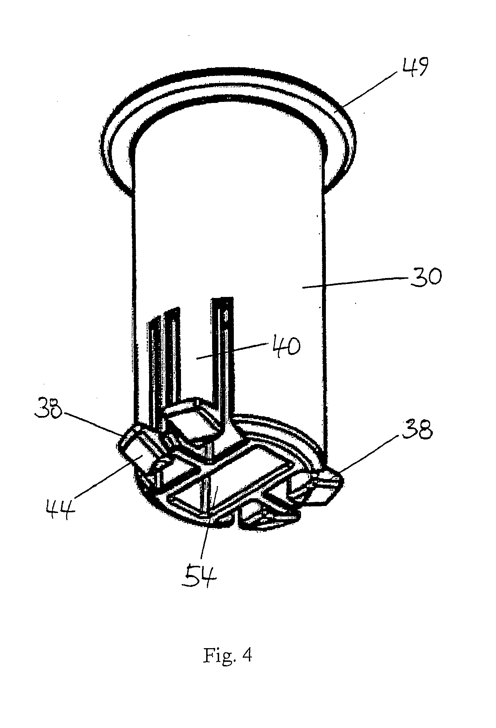

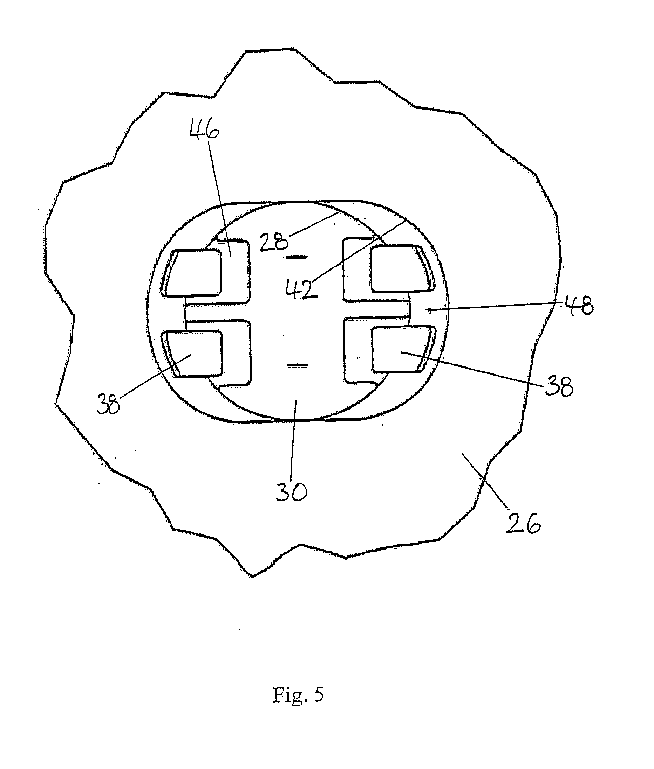

In den Figuren 1-6 ist eine erste Ausführungsform der die Verbindung zwischen zwei benachbarten Gliedern 12 herstellenden Mittel dargestellt. Der zylindrische Bolzen 30, dessen Außendurchmesser dem Innendurchmesser der Bohrung 36 des zwischen den Schenkeln 24, 26 gehaltenen Gelenkkörpers 34 der zweiten Verbindungskomponente und der Bohrungen in den beiden Schenkeln 24, 26 der ersten Verbindungskomponente angepasst ist, weist an seinem einen Ende nach außen über die Kontur des Querschnitts des Bolzens 30 vorstehende Rastnasen 38 auf. Diese sind jeweils am freien Ende eines Steges 40 angebracht. Die Fig. 4 und 5 lassen erkennen, dass den einstückig mit dem Bolzen 30 verbundenen Stegen 40 rückseitig, also an der der Mantelfläche des Bolzens abgekehrten Seite, jeweils ein Freiraum 46 zugeordnet ist, in den hinein die Stege ausweichen können, wenn auf die Rastnasen ein etwa radial nach innen gerichteter Druck ausgeübt ist. Der Freiraum 46 erlaubt auch ein geringes seitliches Ausweichen der Stege 40.

Die Durchbrechung 28 im zweiten Schenkel 26, welche den mit den Rastnasen 38 versehenen Endbereich des Bolzens 30 aufnimmt, ist an ihrem dem ersten Schenkel 24 abgekehrten Ende mit einer Querschnittserweiterung 42 versehen, welche derart ausgebildet und angeordnet ist, dass ihre kleinere Achse dem Durchmesser der Öffnung 28 entspricht und ihre dazu senkrechte, längere Achse größer als der Durchmesser der Durchbrechung 28 bzw. der kleineren Achse dieser ellipsenähnlichen Querschnittserweiterung 42 ist (vgl. Fig. 4 und 5).

Beim Einführen des Bolzen 30 aus der in Fig. 3 dargestellten Position in den von den Bohrungen 27, 28 in den Schenkeln und der Bohrung 36 im Gelenkkörper 34 gebildeten Sitz werden die Rastnasen 38 auf Grund der an ihrem jeweiligen freien Ende vorgesehen Abschrägung 44 und ihrer Elastizität bzw. der der sie tragenden Stege 40 nach innen in den jeweiligen Freiraum 46 (Fig. 5) gedrückt, bis die Rastnasen sich innerhalb der kreisförmigen Kontur des Bolzens 30 befinden und somit beim Einführen in den zweiten Sitz kein Hindernis in Form eines Anschlages oder dgl. bilden.

Die Tiefe der Querschnittserweiterung 42 parallel zur Längsachse der Bohrung 42 entspricht etwa der Abmessung der Rastnasen in derselben Richtung. Durch die Erweiterung 42 wird eine Stufe mit einer senkrecht zur Längsachse der Bohrung 28 verlaufenden Anschlagfläche 48 gebildet, die von den Rastnasen 38 hintergriffen wird, wenn der Bolzen 30 die entsprechende Winkellage in seiner Umfangsrichtung einnimmt, in welcher die Rastnasen 38 jeweils im Bereich der Anschlagflächen 48 angeordnet sind. Bei dem in der Zeichnung dargestellten Ausführungsbeispiel nehmen die Rastnasen dabei eine Position ein, in welcher die sie tragenden Stege 40 noch unter einer gewissen nach außen gerichteten Vorspannung stehen, so dass die Position des Bolzens 30 gegen Längsverschiebung durch den vorhandenen Formschluss zwischen Rastnasen 38 und Anschlagfläche 48 gesichert ist.

An seinem anderen Ende ist der Bolzen 30 mit einem vorzugsweise umlaufenden Flansch 49 versehen (vgl. Figuren 2 und 4), der in eine entsprechende Erweiterung 50 der Bohrung 27 im Schenkel 24 an dessen den Schenkel 26 abgekehrter Seite eingreift. In welcher Winkelposition der Bolzen 30 beim Einführen in den von Gabel und Gelenkkörper 34 gebildeten zweiten Sitz eingeführt wird, ist zunächst ohne Belang, da die Rastnasen 38 aufgrund der an ihrem freien Ende jeweils vorhandenen Abschrägung 44 ohnehin aufgrund der dabei wirksamen nach innen gerichteten Kräfte in Richtung auf die Längsachse der Bolzen in den Freiraum 46 verschoben werden, bis die Rastnasen mit ihren äußeren Begrenzungen nicht mehr über die Kontur des Bolzens bzw. den Querschnitt der Bohrungen 27, 28 und 36 nach außen hinausragen. Es ist dann lediglich am Ende des Einschiebens des Bolzens 30 in diesen zweiten Sitz sicherzustellen, dass die Winkelposition des Bolzens 30 derart eingestellt ist oder im Bedarfsfall durch Rotation des Bolzens um seine Längsachse eingestellt wird, dass die Rastnasen im Bereich der durch die Querschnittserweiterung hergestellten Anschlagfläche 48 liegen und sich somit unter der Einwirkung der nach außen gerichteten Federspannung in diesen Freiraum hineinschieben, um den Formschluss mit der Anschlagfläche 28 zu bewirken.

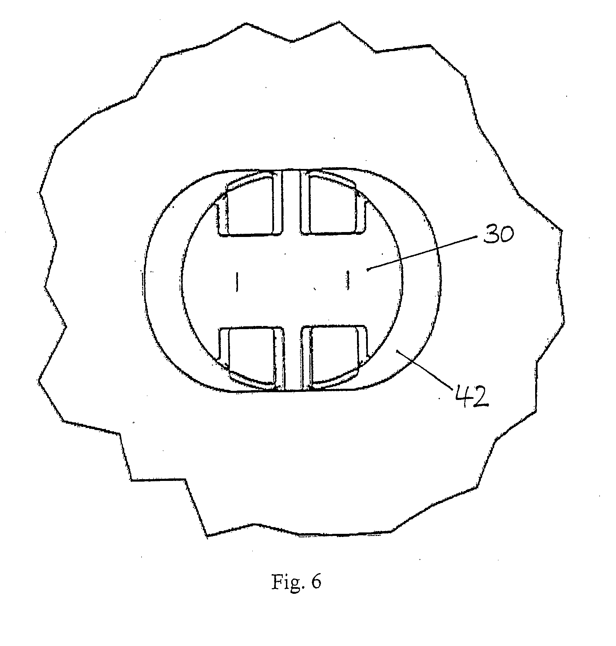

Zum Lösen der Verbindung ist es lediglich erforderlich, den Bolzen aus der Position gemäß Figur 5 in die gemäß Figur 6 derart zu drehen, dass die Rastnasen in den Umfangsbereich der Erweiterung 42 zu liegen kommen, welchem die kürzere Achse, deren Länge im Durchmesser der Bohrung 28 im Schenkel 26 entspricht, zugeordnet ist. Figur 6 lässt erkennen, dass die Rastnasen im Verlauf der Drehbewegung durch die die Querschnittserweiterung 42 begrenzende umlaufende Wandung nach innen, also in den jeweils zugeordneten Freiraum 46 (vgl. Figur 5) gedrückt werden und somit außer Eingriff mit der Anschlagfläche 28 kommen. Der Bolzen 30 ist an seinen beiden Enden mit in den Figuren 5 und 6 nicht dargestellten jeweils einen entsprechenden Querschnitt aufweisenden Ausnehmungen 52, 54 versehen, mit welchen ein entsprechend geformtes Werkzeug in Eingriff bringbar ist, um den Bolzen in die jeweils gewünschte Position um seine Längsachse zu rotieren.

Die Mantelabschnitte 24 der einzelnen Glieder 12 sind mit entsprechenden Öffnungen 56 versehen, durch die ein Werkzeug eingeführt werden kann, um den Bolzen 30 in der erforderlichen Weise um seine Längsachse zu verdrehen.

Der Gelenkkörper 34 kann aufgrund der Elastizität der zusammenwirkenden Teile mittels einer Schnappverbindung im Sitz 32 gehalten sein, wobei der innerhalb Bohrung 36 befindliche Bolzen 30 diese Schnappverbindung sichert.

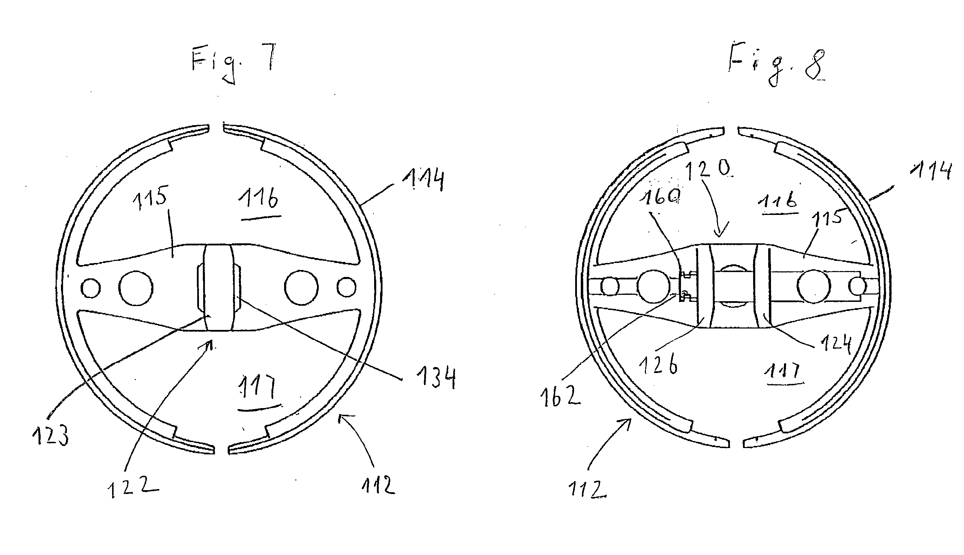

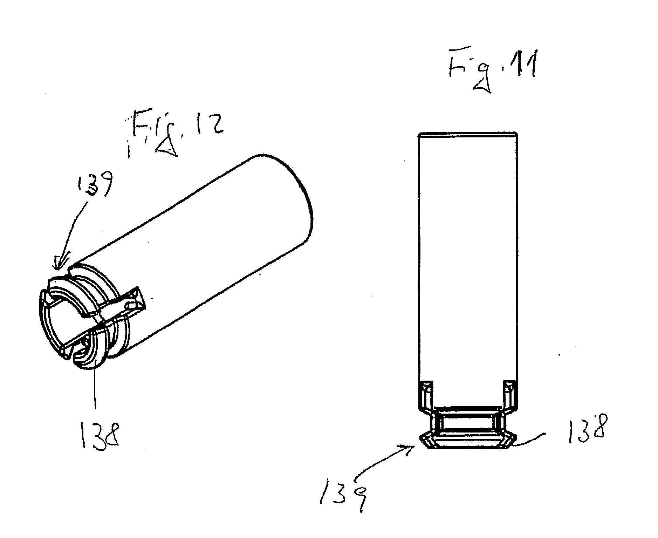

Das in den Figuren 7-12 dargestellte zweite Ausführungsbeispiel stimmt in wesentlichen Teilen mit dem der Figuren 1-6 überein, so dass für gleiche Teile auch gleiche, um jeweils 100 höhere Bezugszeichen verwendet werden.

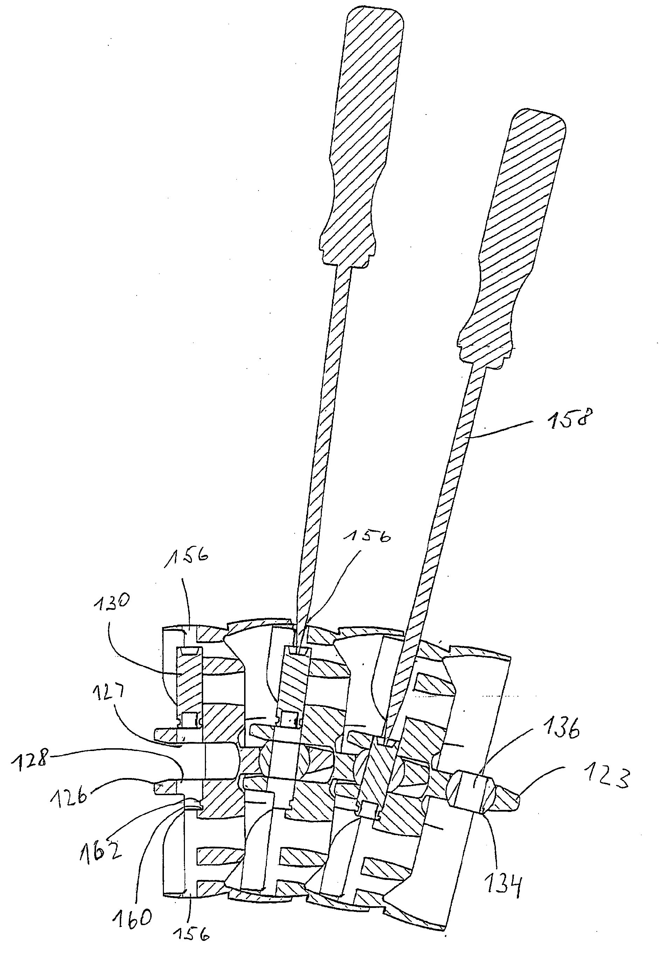

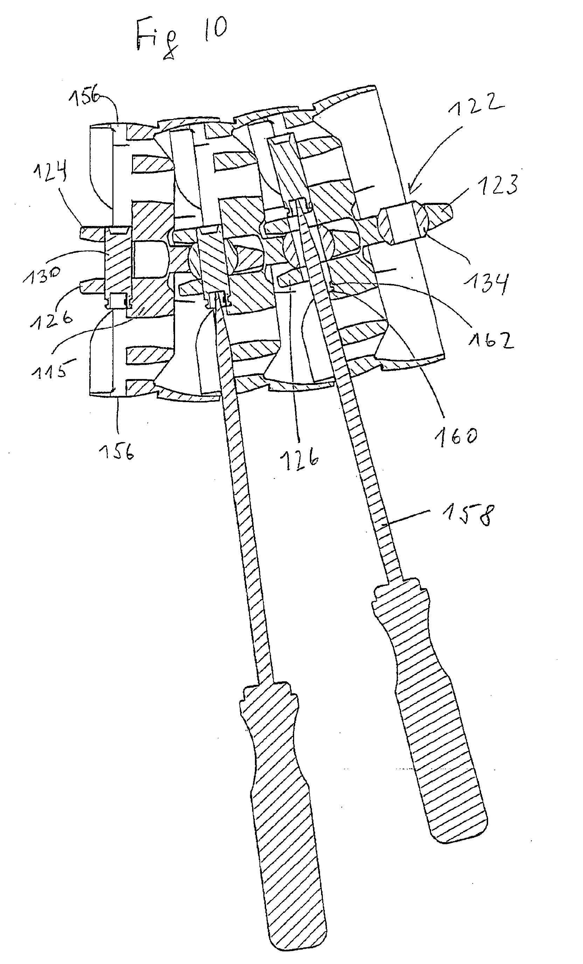

Ein Unterschied zwischen beiden Ausführungsformen besteht darin, dass die Verbindungskomponenten 120, 122 des zweiten Ausführungsbeispiels derart zum Längsverlauf des die Verbindungselemente 118 tragenden Steges 115 angeordnet sind, dass die Längsachse der in beiden Verbindungskomponenten befindlichen Durchbrechungen 127, 128 bzw. 136, die den Sitz für den Bolzen 130 bilden, im Wesentlichen parallel zur Längsachse des Steges 115 verlaufen. Die Längsachse des letzteren stellt einen Durchmesser der vom jeweiligen Mantelteil 114 begrenzten Querschnittsfläche dar. Demzufolge sind die Durchbrechungen 156 in den Mantelteilen 114 der Glieder 112, durch welche ein Werkzeug 158 in den inneren Querschnittsbereich des jeweiligen Gliedes 112 zur Handhabung des Verbindungsbolzens 130 eingeführt wird, so angeordnet, dass sie zu dem in seiner wirksamen Position befindlichen Bolzen 130 und dem ihn aufnehmenden Sitz etwa koaxial ausgerichtet sind, um so dem Bolzen 130 an seinen beiden Enden zugänglich zu machen, sei es zum Einführen des Bolzens in seine wirksame Position zum Herstellen der Verbindung zwischen zwei benachbarten Gliedern 112 (Figur 9), sei es zum Lösen dieser Verbindung mittels Ausstoßens des Bolzens aus dem von den beiden Verbindungskomponenten 120, 122 und dem Arm 123 gebildeten Sitz (Fig. 10). Diese Anordnung der Verbindungskomponenten mit entsprechender Anordnung der Durchbrechungen 156 für den Durchgang des Werkzeugs hat den Vorteil, dass letzteres beim Handhaben des Verbindungsbolzens 130 nicht durch einen der Kabel, Leitungen oder dergleichen aufnehmenden Führungskanäle 116, 117 bewegt werden muss, um an den Bolzen heranzukommen. Vielmehr kann das Werkzeug 158 entlang dem Steg, also in dem Bereich außerhalb der Führungskanäle 116, 117 und damit außerhalb der von diesen aufgenommenen Kabel usw. bewegt werden, wobei der Steg gegebenenfalls auch als Führung für das Werkzeug dienen kann.

Auch bei der Ausführungsform gemäß den Figuren 7-12 ist der Bolzen 130 mit Rastnasen 138 versehen, die von Stegen 140 getragen werden. Rastnasen und Stege können auch hier einstückig mit dem zylindrischen Bolzen verbunden sein. Sie sind jedoch derart angeordnet und bemessen, dass der von den Rastnasen 138 gebildete unterteilte Ring 139 einen maximalen Durchmesser aufweist, welcher nicht größer zu sein braucht als der des eigentlichen Bolzens 130. Die Figuren 9 und 10 lassen erkennen, dass dem Schenkel 126 der Verbindungskomponente 120 ein einen Kreisabschnitt bildender Rastsitz 160 zugeordnet ist, welcher der Form der Rastnasen angepasst ist und in welchen die Rastnasen in der in Fig. 9 unten dargestellten wirksamen Endposition des Bolzens 130 einschnappen. Die Rastnasen hintergreifen in der wirksamen Endposition des Bolzens 130 einen leistenförmigen Vorsprung 162, welcher den Rastsitz 160 begrenzt. Dadurch ist der Bolzen in seiner Lage gesichert. Bei dem in der Zeichnung dargestellten Ausführungsbeispiel ist dieser Vorsprung 162 nicht über den gesamten Umfang des Bolzens 130 vorhanden, da der Sitz des Bolzens im Endbereich desselben nur auf einem Teilumfang vorhanden ist, der jedoch vorteilhafter Weise wenigstens 180 °C betragen sollte. Die Tatsache, dass der Bolzen 130 mit den Rastnasen 138 und den diese tragenden Stegen aus Kunststoff hergestellt ist, gibt die Möglichkeit, den Bolzen 130 im Bedarfsfall in der in Figur 10 in aufeinanderfolgenden Schritten beispielsweise aus seinem die Verbindung zwischen zwei benachbarten Gliedern 111 bewirkenden Sitz auszustoßen, wobei die Rastnasen auf Grund der Elastizität des Materials nach innen, also in Richtung auf die Längsachse des Bolzens verschoben und somit außer Eingriff mit dem Rastsitz gebracht werden. In Anbetracht der Tatsache, dass in der wirksamen Endposition des Bolzens mit eingerasteten Rastnasen auf den Bolzen im Wesentlichen nur Kräfte quer seiner Längsrichtung einwirken, reicht die dargestellte Rastverbindung aus, um den Bolzen 130 in seiner wirksamen Endposition und damit die beiden Verbindungskomponenten des Verbindungselementes 118 zusammen zu halten.

Der Bolzen 130 des zweiten Ausführungsbeispiels benötigt an seinem die Rastnasen abgekehrten Ende keinen umlaufenden Flansch, da er bei in den Rastsitz 160 eingeschnappten Rastnasen in beiden Längsrichtungen gegen Verschieben gesichert ist.

Abweichend von dem in der Zeichnung dargestellten Ausführungsbeispiel kann der Rastsitz 160 auch über mehr als 180° umlaufend ausgeführt werden, wobei die Rastnasen dementsprechend auch über einen größeren Bereich, gegebenenfalls den gesamten Umfang verteilt in den Rastsitz eingreifen. Dies ist jedoch im Allgemeinen im Hinblick auf die in Längsrichtung des Bolzens auf diesen einwirkenden geringen Kräfte nicht erforderlich.

Die einzelnen Glieder 12, 112 können, abgesehen vom Bolzen 30, 130 und dem im Arm 23, 123 bewegbar gelagerten Gelenkteil 34, 134 einstückig aus Kunststoff hergestellt sein.

### Bezugszeichenliste

- 10: Kabelführung
- 12: Glied
- 14: Mantelteil
- 15: Steg
- 16: Führungskanal
- 17: Führungskanal
- 18: Verbindungselement
- 20: Verbindungskomponente
- 22: Verbindungskomponente
- 23: Arm
- 24: Schenkel
- 26: Schenkel
- 27: Durchbrechung, Bohrung
- 28: Durchbrechung, Bohrung
- 30: Bolzen
- 32: Durchbrechung
- 34: Gelenkkörper
- 35: Begrenzungsfläche
- 36: Bohrung
- 38: Rastnase
- 40: Steg
- 42: Querschnittserweiterung
- 44: Abschrägung
- 46: Freiraum
- 48: Anschlagfläche
- 49: Flansch
- 50: Erweiterung
- 52: Ausnehmung
- 54: Ausnehmung
- 56: Durchbrechung
- 112: Glied
- 114: Mantelteil
- 115: Steg
- 116: Führungskanal
- 117: Führungskanal
- 118: Verbindungselement
- 120: Verbindungskomponente
- 122: Verbindungskomponente
- 123: Arm
- 124: Schenkel
- 126: Schenkel
- 127: Durchbrechung, Bohrung
- 128: Durchbrechung, Bohrung
- 130: Bolzen
- 134: Gelenkkörper
- 136: Bohrung
- 138: Rastnase
- 139: unterteilter Ring
- 140: Steg
- 156: Durchbrechung
- 158: Werkzeug
- 160: Rastsitz
- 162: Vorsprung

## Patentansprüche

1. Kabelführung (10; 110) aus gelenkig miteinander verbundenen und jeweils zumindest in zwei Richtungen gegeneinander abwinkelbaren stirnseitig offenen Gliedern (12; 112),die in Längsrichtung der Kabelführung hintereinander angeordnet und mittels ihrer außenseitigen Führungselemente zumindest einen Führungskanal (17, 17; 116, 117) bilden, wobei innerhalb der Kabelführung Zugkräfte aufnehmende Gelenkverbindungen zwischen zwei miteinander verbundenen Gliedern angeordnet sind und die Glieder (12; 112) jeweils miteinander korrespondierende Verbindungselemente (18; 118) mit zwei Verbindungskomponenten (20, 22; 120, 122) aufweisen und die erste Komponente (20; 120) des Verbindungselementes (18; 118) gabelförmig mit zwei voneinander beabstandeten Schenkeln (24, 26; 124, 126) ausgebildet ist und die zweite Verbindungskomponente einen ersten Sitz (32; 132) für ein Gelenkteil aufweist, **dadurch gekennzeichnet, dass** der erste Sitz (32; 132) mit einer sphärischen Begrenzungsfläche versehen ist und ein mit einer Durchbrechung (36; 136) versehenes Gelenkteil (34; 134) mit einer an den ersten Sitz angepassten sphärischen äußeren Begrenzungsfläche (35) in diesem bewegbar gelagert ist, und die zweite Komponente mit dem darin befindlichen Gelenkteil (34) zwischen die beiden Schenkel der ersten Komponente positionierbar ist derart, dass die Durchbrechung (36)in dem außen sphärisch begrenzten Gelenkteil zu einer Durchbrechung (27, 28; 127, 128) ausgerichtet ist, die in jedem der beiden Schenkel (24, 26; 124, 125) vorhanden ist, so dass in den von den Durchbrechungen in den beiden Schenkeln der ersten Komponente und der Durchbrechung im Gelenkteil der zweiten Komponente gebildete zweite Sitz ein Bolzen (30; 130) einführbar ist, welcher in diesem gelagert ist.

2. Kabelführung nach Anspruch 1, **dadurch gekennzeichnet, dass** die Verbindungselemente (18; 118) von Halterungen (15; 115) getragen sind, welche mit den Mantelteilen (14; 114) der Glieder (12; 112) verbunden sind.

3. Kabelführung nach Anspruch 2, **dadurch gekennzeichnet, dass** die Halterungen als vorzugsweise etwa radial verlaufende Stege (15; 115) ausgebildet sind.

4. Kabelführung nach Anspruch 2, **dadurch gekennzeichnet, dass** die Halterung (15; 115) sich in einer Richtung erstreckt, die im Wesentlichen parallel zu dem Bolzen (30; 130) verläuft.

5. Kabelführung nach Anspruch 2, **dadurch gekennzeichnet, dass** die Halterung (15; 115) die Querschnittsfläche des jeweiligen Gliedes (12; 112) im Wesentlichen radial durchquert und vorzugsweise an beiden Enden mit dem Mantelteil (14; 114) verbunden ist.

6. Kabelführung nach Anspruch 1, **dadurch gekennzeichnet, dass** der Bolzen (30; 130) an seinem ersten Ende mit elastisch verstellbaren rastartigen Vorsprüngen (38; 138) versehen ist, welcher in der montiertem Position der Teile eine Anschlagfläche (40; 162) hintergreifen und somit den Bolzen in seiner Lage gegen Längsverschieben sichern.

7. Kabelführung nach Anspruch 6, **dadurch gekennzeichnet, dass** der Bolzen (30; 130) mit den Rastvorsprüngen (38; 138) einstückig aus einem elastischen Kunststoff hergestellt ist.

8. Kabelführung nach Anspruch 6, **dadurch gekennzeichnet, dass** die Rastvorsprünge (38; 138) an den freien Enden von elastisch verformbaren Stegen (40; 140) angebracht sind, die vorzugsweise etwa parallel zur Längsachse des Bolzens verlaufen und mit diesem derartig einstückig verbunden sind, dass sie elastisch in eine wirksame und eine unwirksame Position verschiebbar sind.

9. Kabelführung nach Anspruch 8, **dadurch gekennzeichnet, dass** an oder nahe dem Schenkel (24; 124) der ersten Komponente (20; 120) des Verbindungselementes (18; 118), welchem das die Rastvorsprünge (38) tragende Ende des Bolzens (30; 130) benachbart ist, ein Sitz für die Rastvorsprünge (38; 138) vorgesehen ist, in welchen letztere in der wirksamen Endposition des Bolzens unter der Einwirkung der elastischen Rückstellkraft der sie tragenden Stege einschnappen.

10. Kabelführung nach Anspruch 9, **dadurch gekennzeichnet, dass** der Rastsitz (160) für die Rastvorsprünge (138) derartig ausgebildet und bezüglich seiner Tiefe so bemessen ist, dass die mit entsprechenden Abschrägungen versehenen Rastvorsprünge (138) unter der Einwirkung einer entsprechend bemessenen, auf den Bolzen in Längsrichtung desselben einwirkenden Kraft sich unter Verformung der sie tragenden Stege aus dem Rastsitz (160) lösen.

11. Kabelführung nach Anspruch 1, **dadurch gekennzeichnet, dass** die Durchbrechung (28) in wenigstens einem der beiden Schenkel (26) der ersten Verbindungskomponente (20) an ihrem dem jeweils anderen Schenkel abgekehrten Ende eine Querschnittserweiterung (42) aufweist, die über eine Schulter (48) in den Abschnitt der Durchbrechung (28) mit dem kleineren Querschnitt übergeht.

12. Kabelführung nach Anspruch 11, **dadurch gekennzeichnet, dass** die Querschnittserweiterung (42) der zylindrischen Durchbrechung (28) in dem einen Schenkel (26) eine einer Ellipse angenäherte Querschnittsform aufweist derart, dass die kürzere Achse des Querschnittes etwa dem Durchmesser der den Bolzen aufnehmenden Durchbrechung (28) kleineren Querschnitts im Schenkel entspricht und die längere, dazu senkrecht verlaufende Achse größer ist als der Durchmesser dieser Durchbrechung kleineren Querschnitts und die rastartigen Vorsprünge (38) um Umfangsbereiche am Ende des Bolzens (30) derart angeordnet sind, dass sie in der montierten Position der Teile den Bereichen (42) mit erweitertem Querschnitt zugeordnet sind.

13. Kabelführung nach Anspruch 1, **dadurch gekennzeichnet, dass** zumindest die zusammenwirkenden Bereiche von dem den ersten Sitz (32; 132) bildenden Arm (23; 123) und dem von diesem bewegbar aufgenommenen Gelenkteil (34; 134) mit sphärischer äußerer Begrenzungsfläche aus einem elastischen Kunststoff hergestellt sind.

14. Kabelführung nach Anspruch 1, **dadurch gekennzeichnet, dass** die Mantelteile (14; 114) mit Durchbrechungen (56; 156) für das Hindurchführen von Werkzeugen zur Handhabung der Verbindungsteile versehen sind.

15. Kabelführung nach Anspruch 13, **dadurch gekennzeichnet, dass** die vorzugsweise kreisförmigen Durchbrechungen (156) in den Mantelteilen so angeordnet sind, dass sie sich etwa in Verlängerung der Längsachse des Bolzens (130) und parallel zu dem im Wesentlichen radialen Verlauf der Halterung (115) befinden.

## Claims

1. Cable guide (10; 110), consisting of links (12; 112), connected to each other in articulated fashion, capable of angling in at least two directions relative to each other, and open on the face end, which are arranged one behind the other in the longitudinal direction of the cable guide and form at least one guide channel (17, 17; 116, 117) by means of their external guide elements, where joints absorbing tensile forces are located between two connected links within the cable guide, and the links (12; 112) each display corresponding connecting elements (18; 118) with two connecting components (20, 22; 120, 122)and the first component (20; 120) of the connecting element (18; 118) is of fork-shaped design with two legs (24, 26; 124, 126) a distance apart from each other, and the second connecting component displays a first seat (32; 132) for a joint element, **characterized in that** the first seat (32; 132) is provided with a spherical boundary surface and **in that** a joint element (34; 134), having an opening (36; 136) and a spherical outer boundary surface (35) adapted to the first seat, is mounted in moveable fashion in it, and the second component with the joint element (34) located in it can be positioned between the two legs of the first component in such a way that the opening (36) in the joint element with a spherical outer boundary surface is aligned with an opening (27, 28; 127, 128) provided in each of the two legs (24, 26; 124, 125), such that a pin (30; 130) can be inserted into the second seat formed by the openings in the two legs of the first component and the opening in the joint element of the second component, and is mounted in it.

2. Cable guide according to Claim 1, **characterized in that** the connecting elements (18; 118) are borne on mounts (15; 115) that are connected to the shell sections (14; 114) of the links (12; 112).

3. Cable guide according to Claim 2, **characterized in that** the mounts are designed as webs (15; 115) that preferably run roughly radially.

4. Cable guide according to Claim 2, **characterized in that** the mount (15; 115) extends in a direction running essentially parallel to the pin (30; 130).

5. Cable guide according to Claim 2, **characterized in that** the mount (15; 115) passes essentially radially through the cross-sectional area of the respective link (12; 112), and is preferably connected to the shell section (14; 114) at both ends.

6. Cable guide according to Claim 1, **characterized in that** the first end of the pin (30; 130) is provided with elastically displaceable, snap-type projections (38; 138) that, in the mounted position of the parts, reach behind a stop face (40; 162) and thus protect the position of the pin from longitudinal displacement.

7. Cable guide according to Claim 6, **characterized in that** the pin (30; 130) with the snap-in projections (38; 138) is manufactured from an elastic plastic in one piece.

8. Cable guide according to Claim 6, **characterized in that** the snap-in projections (38; 138) are located on the free ends of elastically deformable webs (40; 140), which preferably run roughly parallel to the longitudinal axis of the pin and are integrally connected to it in such a way that they can be elastically displaced into an active position and an inactive position.

9. Cable guide according to Claim 8, **characterized in that**, on or near the leg (24; 124) of the first component (20; 120) of the connecting element (18; 118) to which the end of the pin (30; 130) bearing the snap-in projections (38) is adjacent, a seat for the snap-in projections (38; 138) is provided, into which the latter snap in the active, final position of the pin under the effect of the elastic restoring force of the webs bearing them.

10. Cable guide according to Claim 9, **characterized in that** the snap-in seat (160) for the snap-in projections (138) is designed, and dimensioned in terms of its depth, in such a way that the snap-in projections (138), provided with corresponding bevels, are disengaged from the snap-in seat (160) under the effect of a correspondingly dimensioned force acting on the pin in its longitudinal direction, the webs bearing them being deformed in the process.

11. Cable guide according to Claim 1, **characterized in that** the opening (28) in at least one of the two legs (26) of the first connecting component (20) displays, at its end facing away from the other leg, a wider cross-section (42) that transitions, via a shoulder (48), into the section of the opening (28) with the smaller cross-section.

12. Cable guide according to Claim 11, **characterized in that** the wider cross-section (42) of the cylindrical opening (28) in the one leg (26) displays an approximately elliptical cross-sectional shape, such that the shorter axis of the cross-section roughly corresponds to the diameter of the opening (28) with the smaller cross-section in the leg, which accommodates the pin, and the longer axis, running perpendicular thereto, is larger than the diameter of this opening with the smaller cross-section, and the snap-like projections (38) are located around circumferential areas at the end of the pin (30) in such a way that, in the mounted position of the parts, they are assigned to the areas (42) with a wider cross-section.

13. Cable guide according to Claim 1, **characterized in that** at least the interacting areas of the arm (23; 123) forming the first seat (32; 132), and of the joint element (34; 134) with spherical outer boundary surface received by it in moveable fashion, are made of an elastic plastic.

14. Cable guide according to Claim 1, **characterized in that** the shell sections (14; 114) are provided with openings (56; 156) for passing through tools for manipulating the connecting parts.

15. Cable guide according to Claim 13, **characterized in that** the preferably circular openings (156) in the shell sections are arranged in such a way that they lie roughly on the extension of the longitudinal axis of the pin (130) and parallel to the essentially radial extension of the mount (115).

## Revendications

1. Cheminement de câble (10; 110) constitué d'éléments (12; 112) reliés de façon articulée les uns aux autres, pouvant être pliés chaque fois au moins dans deux directions les uns par rapport aux autres et ouverts sur le côté avant, lesquels sont disposés les uns derrière les autres dans le sens longitudinal du cheminement de câble et forment au moins un canal de cheminement (17; 17; 116, 117) au moyen de leurs éléments de guidage côté extérieur, des liaisons articulées recevant des forces de traction étant disposées à l'intérieur du cheminement de câble entre deux éléments reliés l'un à l'autre et les éléments (12; 112) présentant des éléments de liaison (18; 118) correspondant les uns aux autres et dotés de deux composants de liaison (20, 22; 120, 122) et le premier composant (20; 120) de l'élément de liaison (18; 118) est conçu en forme de fourche avec deux branches (24, 26; 124, 126) espacées l'une de l'autre, et le second composant de liaison présentant un premier siège (32; 132) pour une partie articulée, **caractérisé en ce que** le premier siège (32; 132) est muni d'une surface de délimitation (35) sphérique et **en ce qu'**une partie articulée (34; 134) dotée d'un percement (36) avec une surface de délimitation (35) extérieure, sphérique est logée de façon mobile dans ledit siège, et le second composant avec la partie articulée (34) pouvant être positionné avec la partie articulée (34) se trouvant à l'intérieur entre les deux branches du premier composant de telle sorte que le percement (36) dans la partie articulée limitée à l'extérieur de façon sphérique est orientée vers un percement (27, 28; 127 128) qui est présent dans chacune des deux branches (24, 26; 124, 125), de sorte que, dans le second siège formé par les percements dans les deux branches du premier composant et le percement dans la partie articulée du second composant, on peut introduire un boulon (30; 130) qui est logé dans ce siège.

2. Cheminement de câble selon la revendication 1, **caractérisé en ce que** les élément de liaison (18; 118) sont portés des dispositifs de fixation (15; 115) reliés aux parties d'enveloppe (14; 114) des éléments (12; 112).

3. Cheminement de cable selon la revendication 2, **caractérisé en ce que** les dispositifs de fixation sont configurés de préférence en forme des âmes (15; 115) s'étendant à peut près radialement.

4. Cheminement de cable selon la revendication 2, **caractérisé en ce que** le dispositif de fixation (15; 115) s'étend dans une direction sensiblement parallèle au boulon (30; 130).

5. Cheminement de cable selon la revendication 2, **caractérisé en ce que** le dispositif de fixation (15; 115) traverse la surface de section transversale de l'élément (12; 112) respectif sensiblement radialement et est connecté avec la partie d'enveloppe (14; 114) de préférence aux deux extrémités.

6. Cheminement de cable selon la revendication 1, **caractérisé en ce que** le boulon (30; 130) est muni, sur sa première extrémité, des projectures encliquetables (38; 138) élastiquement réglables venant en prise, dans la position installée, derrière une surface de butée (40; 162) et ainsi sécurisant le boulon dans sa position et contre un déplacement longitudinal.

7. Cheminement de cable selon la revendication 6, **caractérisé en ce que** le boulon (30; 130) avec ses projectures encliquetables (38; 138) est fabriqué intégralement en matière plastique élastique.

8. Cheminement selon la revendication 6, **caractérisé en ce que** les projectures encliquetables (38; 138) sont montées aux extrémités libres des âmes déformables (40; 140) s'étendant de préférence à peu près parallèlement par rapport à l'axe longitudinal du boulon et étant attachées à celui-ci en une pièce de sorte qu'elles peuvent être déplacées élastiquement vers une position opérante et vers une position inopérante.

9. Cheminement selon la revendication 8, **caractérisé en ce que** sur ou proche de la branche (24; 124) du premier composant (20; 120) de l'élément de liaison (18; 118) voisin l'extrémité du boulon (30; 130) portant les projectures encliquetables (38) est prévu un logement pour les projectures encliquetables (38; 138), lesdites projectures, dans la position finale opérante du boulon, se bloquant par encliquetage dans ledit logement, sous l'influence de la force de rappel élastique des âmes les portant.

10. Cheminement selon la revendication 9, **caractérisé en ce que** le logement à encliquetage (160) pour les projectures encliquetables (138) est agencé et, concernant sa profondeur, dimensionné de sorte que les projectures encliquetables (138) munies des chanfreins correspondants dégagent du logement à encliquetage (160) sous une déformation des âmes les portant, sous l'influence d'une force appropriée agissant sur le boulon dans la direction longitudinal de celui-ci.

11. Cheminement selon la revendication 1, **caractérisé en ce que** le percement (28) comporte, dans l'une au moins des deux branches (26) du premier composant de liaison (20), sur son extrémité détournée de l'autre branche respective, un élargissement de section transversale (42) étant en continuité avec la partie du percement (28) ayant la section transversale plus petite, via un épaulement (48).

12. Cheminement selon la revendication 11, **caractérisé en ce que** ledit élargissement de section transversale (42) du percement cylindrique présente, dans l'une (26) des branches, une section transversale en forme approximative d'ellipse de sorte que l'axe plus court de la section transversale correspond à peu près le diamètre du percement (28) présentant la section transversale plus petite et recevant le boulon, et l'axe plus long et perpendiculaire à l'axe plus court est plus grande que le diamètre de ce percement présentant la section transversale plus petite, et les projectures encliquetables (38) sont disposées sur la zone circonférentielle à l'extrémité du boulon (30) de sorte qu'elles sont affectées, dans la position montée des composants, aux parties (42) présentant la section transversale plus grande.

13. Cheminement de câble selon la revendication 1, **caractérisé en ce que** les parties coopérantes de la branche (23; 123) formant le premier siège (32; 132) et de la partie articulée (34; 134) reçue par ledit siège d'une manière mobile, sont fabriquées avec une surface de délimitation sphérique extérieure et en matière plastique élastique.

14. Cheminement de câble selon la revendication 1, **caractérisé en ce que** les parties d'enveloppe (14; 114) sont dotées des percements (56; 156) pour passer des outils pour manoeuvrer les éléments de liaison.

15. Cheminement de câble selon la revendication 13, **caractérisé en ce que** les percements (156) de préférence circulaires sont disposées dans les parties d'enveloppe de sorte qu'ils se trouvent à peu près dans le prolongement de l'axe longitudinal du boulon (130) est parallèlement par rapport au tracé sensiblement radial du dispositif de fixation (115).
